# FASCICULE DE BREVET EUROPEEN

(11) **EP 2 686 673 B1**
(45) Date de publication et mention de la délivrance du brevet: **04.03.2015**
(21) Numéro de dépôt: 12714794.0
(22) Date de dépôt: 15.03.2012
(51) Int. Cl.: G01N 29/24, G01N 29/26, G01N 29/28, G01N 29/265

(54) **INSTALLATION DE CONTROLE NON DESTRUCTIF, PAR ULTRASONS EN IMMERSION, DE PIECES**
VORRICHTUNG ZUR ZERSTÖRUNGSFREIEN ULTRASCHALLPRÜFUNG VON EINGETAUCHTEN TEILEN.
NON DESTRUCTIVE ULTRASONIC INSPECTION DEVICE BY IMMERSION OF PARTS

(30) Priorité: 16.03.2011 FR 1152150
(43) Date de publication de la demande: 22.01.2014
(73) Titulaire: Snecma, 75015 Paris (FR)
(72) Inventeur: BESSRI, Kamal, F-91450 Soisy Sur Seine (FR); BARDOUILLET, Pascal, F-71100 Saint Remy (FR); BETTEGA, Louis, F-57220 Boucheporn (FR); MIRVILLE, François Jean-Pierre, F-77850 Hericy (FR)
(74) Mandataire: Gevers France
(86) Numéro de dépôt international: PCT/FR2012/050551
(87) Numéro de publication internationale: WO 2012/123687

(56) Documents cités:
- EP-A2- 1 788 386
- WO-A1-2007/008620
- DE-A1- 4 113 519
- US-A- 4 127 033
- US-A- 4 881 177
- US-B1- 6 739 188

## Description

La présente invention concerne une installation de contrôle non destructif, par ultrasons en immersion, de pièces.

Dans une application préférentielle de l'invention, l'installation est destinée au contrôle de pièces tubulaires de turbomachines, telles que les carters de soufflante de turboréacteurs, étant entendu qu'elle pourrait être utilisée pour d'autres types de pièces.

On sait que ce type de pièces présente une géométrie à symétrie de révolution avec des singularités de réalisation comme, par exemple, des zones à brides transversales d'extrémité pour la liaison à des pièces adjacentes, des zones de raccord à rayons interne et externe variables entre les zones à brides et la paroi cylindrique de la pièce tubulaire dans laquelle circule le flux d'air et qui forme la zone courante de celle-ci avec souvent des changements d'épaisseur, des trous, perçages ou analogues dans les zones à brides, etc.... Le carter est par ailleurs réalisé en un matériau composite tissé, constitué d'une structure monolithique à tissage tridimensionnel de fibres de carbone, de préformes en fibres de carbone et d'une résine époxy injectée servant de liant à l'ensemble.

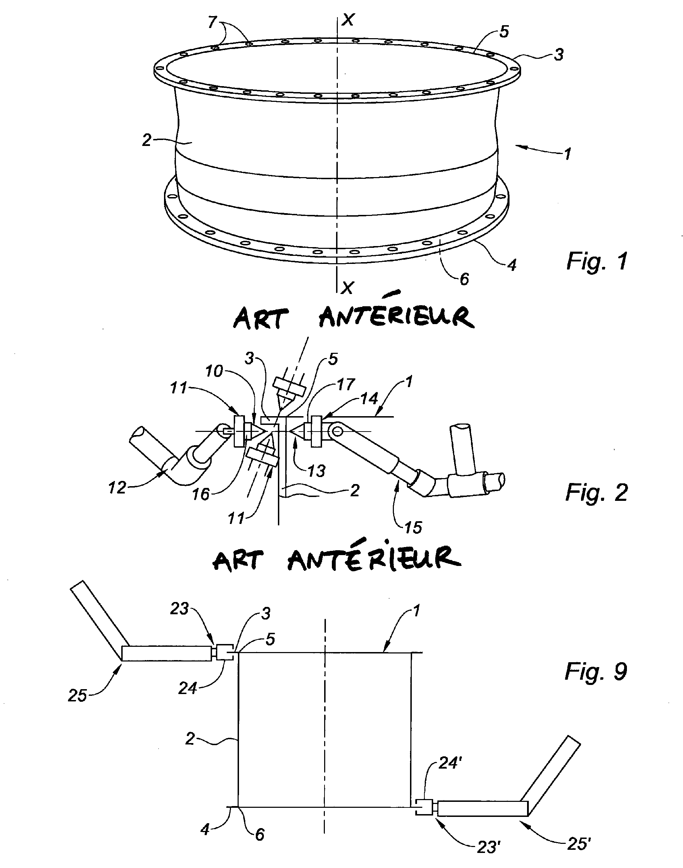

Un exemple d'une telle pièce tubulaire à contrôler est montrée sur la figure 1 représentant un carter externe 1 de soufflante d'un turboréacteur, d'axe longitudinal de symétrie X et dont la réalisation en matériau composite à forte absorption implique, de préférence, le choix d'une installation de contrôle par transmission ultrasonore pour un examen structurel du matériau.

En particulier, le carter 1 est défini par une paroi cylindrique 2 (zone courante) ayant des épaisseurs variables et délimitant la veine de passage de l'air entrant dans la soufflante, et par deux brides transversales d'extrémité 3, 4 (zones à brides) terminant la paroi 2 et s'étendant radialement vers l'extérieur par rapport à celle-ci. Les brides transversales d'extrémité sont issues de la paroi cylindrique 2 par des zones de raccord respectives intermédiaires 5 et 6 avec, pour chacune d'elles, un petit rayon intérieur du côté de la bride, et un grand rayon extérieur opposé. Des trous 7 sont en outre ménagés dans les brides pour le passage d'organes de fixation non illustrés permettant la liaison à d'autres pièces.

Aussi, pour contrôler ces pièces tubulaires composites à brides transversales, dont la dimension est en outre significative (diamètre pouvant atteindre deux mètres pour une longueur coaxiale de près d'un mètre), on utilise une installation de contrôle par ultrasons en immersion, particulièrement bien adaptée pour y détecter, en tant que défauts recherchés, le délaminage ou la décohésion des plis du tissu au niveau de leur interface, les microfissurations autour des perçages et des usinages, des inclusions, des corps étrangers, des zones sèches sans résine ou des zones avec amas de résines, etc...

Une installation de contrôle 9 de l'art antérieur mettant en oeuvre la technique par ultrasons en immersion, est montrée partiellement et schématiquement sur la figure 2 et comprend des traducteurs émetteur et récepteur d'ultrasons. Le traducteur 10 émetteur d'un faisceau d'ultrasons est monté sur un support 11 situé en bout d'un bras robotisé 12, et est tourné, dans cet exemple, vers la périphérie externe du carter 1 définissant la pièce tubulaire. Et le traducteur 13 récepteur du faisceau, aligné coaxialement avec le traducteur émetteur 10, est monté sur un support 14 situé en bout d'un autre bras robotisé 15, et est tourné alors vers la périphérie interne du carter 1. Ainsi, entre les traducteurs alignés 10, 13 se trouve le carter 1 dont la paroi constitutive en matériau composite est alors contrôlée par un déplacement relatif des deux traducteurs robotisés synchronisés par rapport à la pièce 1.

Des buses à jet d'eau 16, 17 sont bien entendu prévues sur les bras, coaxialement aux traducteurs, et permettent de favoriser la transmission ou propagation appropriée du faisceau d'ondes ultrasonores par un jet d'eau continu pour obtenir un « couplage » des traducteurs à la pièce, celle-ci étant disposée dans une cuve ou un lieu spécialement conçu à cet effet pour la récupération du liquide. Un tel emploi de buses à jet d'eau est, par exemple, connu de US 4 881 177.

Cette installation, bien que donnant de bons résultats d'analyse quant à la technique par ultrasons utilisée, présente cependant des inconvénients liés notamment à la géométrie à singularités de la pièce.

En effet, si une telle installation réalise un contrôle efficace de la paroi cylindrique, les traducteurs agissant bien perpendiculairement à celle-ci comme sur la figure 2, en revanche, elle ne permet pas une accessibilité optimale aux zones à brides transversales extérieures 3, 4 et aux zones de raccord 5, 6 du carter de soufflante 1, notamment la zone de raccord à petit rayon de chacune des brides, du coté de la périphérie externe du carter.

Cela provient du fait que le support 11 de la buse et du traducteur concerné (émetteur dans l'exemple) est trop encombrant de sorte que, après avoir suivi perpendiculairement la périphérie externe de la paroi cylindrique 2, il ne peut tourner suffisamment pour suivre la zone de courbure du raccord et la bride transversale concernée. Comme le montre la représentation en trait mixte sur la figure 2, le support 11 de la buse 16 touche la paroi cylindrique 2 dès que le traducteur 10, entraîné par le bras 12, commence à pivoter pour suivre perpendiculairement les zones en question 3 et 5, si bien que le positionnement correct des deux traducteurs et, par suite, le suivi du profil sont incorrects, et le contrôle imparfait. De la sorte, certains défauts précités peuvent ne pas être décélés.

Le problème ne se pose pas pour le support 14 de la buse 17 et de l'autre traducteur 13, qui n'est nullement gêné par la bride transversale.

Il convient aussi de remarquer que la synchronisation des deux bras robotisés pour maintenir les traducteurs coaxiaux lors du suivi des zones à brides et raccords courbes, complique l'automatisation de l'installation.

Par ailleurs, le contrôle en lui-même de la pièce tubulaire de carter avec ses singularités est relativement long puisque, après le contrôle d'une bride transversale d'extrémité, il faut procéder ensuite au contrôle de la bride opposée avec de nouveau les problèmes évoqués ci-dessus.

De plus, l'installation oblige à prévoir une cuve de dimension conséquente pour la réception du carter de soufflante et la récupération de l'eau pulvérisée issue des buses.

La présente invention a pour but de remédier à ces inconvénients et concerne une installation de contrôle par ultrasons en immersion, dont la conception permet de réaliser parfaitement le contrôle de singularités de pièces tubulaires, comme les zones à brides transversales d'extrémité et les zones de raccord à rayons interne et externe.

A cet effet, l'installation de contrôle par ultrasons en immersion d'une pièce tubulaire à paroi cylindrique terminée par des brides transversales d'extrémité, du type comportant des traducteurs émetteur et récepteur d'ultrasons commandables, destinés à être disposés de façon alignée respectivement de part et d'autre de la bride à contrôler, est remarquable par le fait qu'elle comprend une structure en étrier en forme de U ou de C dont les branches opposées portent respectivement le traducteur émetteur et le traducteur récepteur alignés l'un par rapport à l'autre, en ménageant entre eux un espace pour le passage relatif de la bride à contrôler, et dont la base est montée articulée en bout d'un bras mobile de commande.

Ainsi, grâce à l'invention, l'accessibilité aux brides et aux zones de raccord de la pièce est totale et cela par une seule et même structure en étrier (ou chape) portant les traducteurs en lieu et place des deux supports indépendants initialement prévus dans l'installation antérieure. Cette structure permet de réduire l'encombrement de par la forme inhérente de l'étrier en U ou C, d'introduire relativement la bride dans l'étrier entre les traducteurs fixés à ses branches par un suivi de profil adapté, et d'accéder aux zones de raccord à rayons en pivotant la structure tout en maintenant les traducteurs alignés perpendiculairement au profil rencontré de la zone de raccord courbe du carter. Le contrôle du matériau de la pièce et de ses singularités est alors optimal, sans contact entre la pièce et l'étrier.

Par un déplacement relatif entre la structure et la pièce, la bride transversale entre laquelle s'engagent parallèlement les branches de l'étrier, peut être contrôlée sur toute sa périphérie, et le déplacement de la structure permet de suivre et de contrôler les zones de raccord à rayons jusqu'à la zone courante de transition.

De plus, un seul bras robotisé est alors utilisé pour contrôler la bride transversale en lieu et place des deux bras robotisés de l'installation antérieure.

Enfin, on remarque la simplicité de réalisation de la structure sous la forme d'un simple étrier en U. Une telle structure permet de suivre ainsi le profil de chaque bride transversale et des zones de rayons associées.

Les traducteurs émetteur et récepteur sont situés en bout des branches opposées de la structure en étrier, ce qui permet d'optimiser la profondeur et donc l'espace interne de l'étrier pour recevoir la bride ou autre singularité analogue dimensionnellement large et déplacer l'étrier sans toucher la bride.

Avantageusement, les traducteurs émetteur et récepteur sont montés de façon réglable par rapport aux branches opposées respectives, permettant d'adapter leur écartement et focalisation en fonction de l'épaisseur de la bride à contrôler.

Selon une autre caractéristique de l'installation, la structure en étrier portant les traducteurs est agencée dans une boîte (ou bac) d'immersion qui contient un liquide pour le couplage des traducteurs entre eux et qui est disposée sur la bride à contrôler. Ainsi, une immersion seulement partielle des zones à contrôler de la pièce, autour des traducteurs, est suffisante pour l'examen et assurer le couplage des ondes ultrasonores entre les traducteurs, sans recourir à une cuve démesurée apte à contenir le carter (diamètre atteignant deux mètres) ou un lieu dédié à cet effet.

Selon l'invention, boîte d'immersion chevauche avec étanchéité la bride jusqu'à la paroi cylindrique. Avantageusement, ladite boîte est relativement mobile par rapport à la pièce pour permettre le contrôle périphérique complet de la bride.

De préférence, la boîte d'immersion est fixe par rapport à la pièce tubulaire qui est apte à être mise en rotation autour de son axe longitudinal de symétrie, ladite boîte d'immersion étant munie d'organes de roulement destinés à coopérer avec la face transversale extérieure de la bride, ce qui facilite la rotation de la pièce par rapport à la boîte.

Selon l'invention, la boîte d'immersion peut comporter deux parties assemblées entre elles par un moyen de fermeture, l'une des parties présentant des découpes pour l'engagement de la bride transversale et chevaucher avec l'autre partie, ladite bride jusqu'à la paroi cylindrique de la pièce, des joints d'étanchéité étant prévus entre les parties assemblées et la pièce.

Pour faire tourner la pièce par rapport à la boîte d'immersion fixe, un plateau tournant commandable peut assurer la rotation de la pièce tubulaire.

Avantageusement, deux structures en étrier à traducteurs émetteur et récepteur et bras commandables respectifs sont prévues pour permettre le contrôle simultané des deux brides transversales d'extrémité de la pièce tubulaire. Les deux bras robotisés de l'installation antérieure peuvent être ainsi utilisés simultanément pour le contrôle des deux brides d'extrémité et des zones de raccords du carter, réduisant les temps de contrôle. Les deux bras sont aussi utilisés pour contrôler la paroi cylindrique ou zone courante du carter selon l'installation précédente.
Les figures du dessin annexé feront bien comprendre comment l'invention peut être réalisée.
La figure 1 montre en perspective un exemple de réalisation d'une pièce de révolution destinée à être contrôlée par l'installation conformément à l'invention.
La figure 2 représente, de façon schématique et partielle, une installation de contrôle par ultrasons selon l'art antérieur.
La figure 3 représente schématiquement un exemple de réalisation de l'installation de contrôle par ultrasons conformément à l'invention, destinée au contrôle des singularités à brides et raccords de ladite pièce.
La figure 4 montre, en perspective partielle, la structure en étrier et les traducteurs associés de l'installation de la figure 3, prêts au contrôle de la bride concernée de la pièce.
La figure 5 montre, en perspective, un exemple de réalisation de la boîte d'immersion de l'installation assurant l'immersion seule de la zone traitée de la pièce par les traducteurs.
La figure 6 représente la boîte d'immersion de l'installation, montée fixe sur la pièce à contrôler mobile.
Les figures 7 et 8 représentent schématiquement des phases de fonctionnement de la structure en étrier de l'installation pour examiner la bride concernée de ladite pièce.
La figure 9 représente schématiquement deux structures en étrier de l'installation pour procéder simultanément à l'examen respectif des deux brides transversales d'extrémité de la pièce de révolution.

La pièce de révolution à contrôler montrée sur la figure 1 est, de la manière rappelée précédemment, un carter externe 1 de soufflante d'un turboréacteur, d'axe longitudinal de symétrie X et réalisé en matériau composite dont la forte absorption implique le choix d'une installation de contrôle par transmission ultrasonore pour un examen structurel bien que celle-ci convienne aussi pour un matériau métallique. Ce carter ne sera pas davantage décrit et les mêmes références numériques lui sont attribuées.

Le carter 1 avec l'ensemble de ces brides 3, 4, zones de raccord 5, 6, changements d'épaisseur de sa paroi cylindrique 2, trous 7 et autres singularités qu'il présente, est ainsi à contrôler, notamment le matériau composite le constituant.

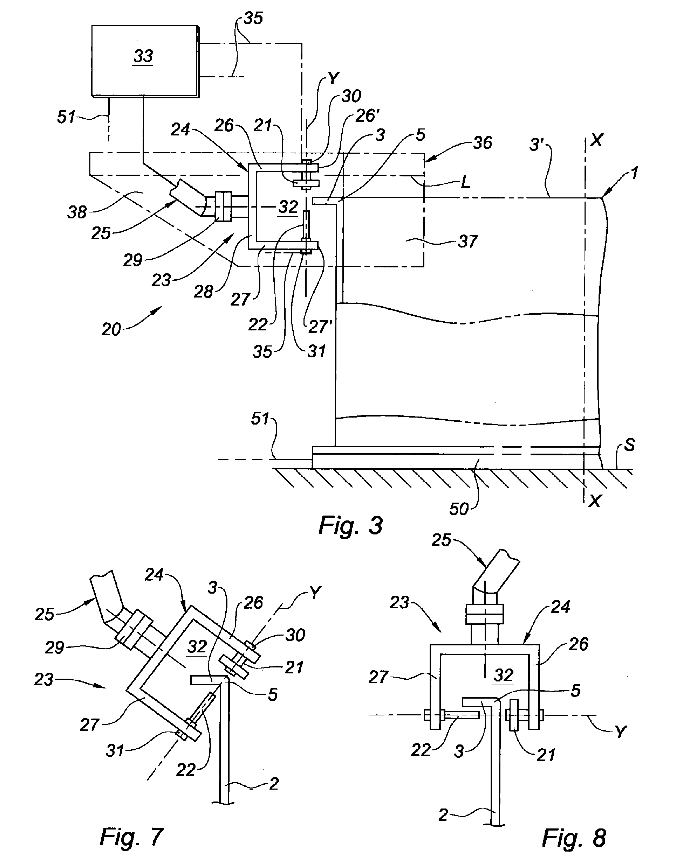

L'installation de contrôle 20 conforme à l'invention et telle que représentée sur la figure 3, est du type par ultrasons en immersion partielle et est destinée à effectuer plus particulièrement l'examen des brides transversales d'extrémité 3, 4 et des zones de raccord 5, 6 de celles-ci avec la zone courante ou paroi cylindrique 2 du carter 1. Pour cela, elle comporte principalement deux traducteurs à ultrasons, respectivement un traducteur émetteur 21 et un traducteur récepteur 22, et une structure de support commune 23 en étrier 24 portant les deux traducteurs 21, 22 et articulée en bout d'un bras mobile de commande 25, par exemple, robotisé tel que ceux illustrés dans la réalisation de la figure 2.

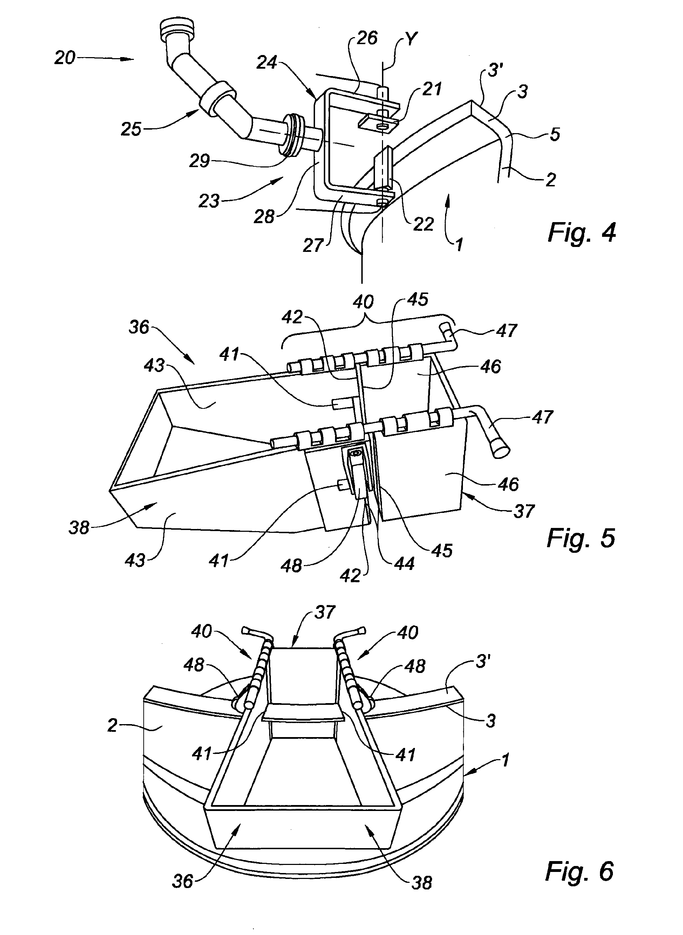

Plus particulièrement, comme le montrent les figures 3 et 4, la structure 23 en étrier 24 est en forme de U (ou de C ou analogue) avec deux branches latérales opposées 26 et 27 (parallèles dans le cas du U) et une base (ou fond) 28 de laquelle sont issues les branches et qui est reliée, du côté opposé aux branches, au bras mobile 25 par une articulation 29 (cylindrique ou sphérique). Sur l'une, 26, des branches est fixé par un organe de liaison par vissage 30 (écrou, etc..), le traducteur émetteur 21 et, en opposition, sur l'autre branche 27 est fixé le traducteur récepteur 22 également par un organe de liaison par vissage 31. Les fixations sont telles que les traducteurs 21, 22 une fois mis en place sont alignés sur un même axe Y l'un par rapport à l'autre, perpendiculairement aux branches, pour une mesure optimale. Et les traducteurs 21, 22 sont par ailleurs situés proches des extrémités libres 26', 27' des branches 26, 27 de façon à créer un espace interne maximal 32 dans l'étrier 24, entre les traducteurs 21, 22 et la base 28 de ce dernier, pour l'engagement total de la bride transversale à contrôler. L'écartement entre les deux traducteurs est également défini préalablement en fonction notamment de l'épaisseur des brides, pour avoir un contrôle de qualité (focalisation des traducteurs).

On a représenté, partiellement sur la figure 3, le bras mobile robotisé 25 de l'installation 20 autorisant des translations et des rotations usuelles selon un référentiel tridimensionnel pour présenter au mieux l'étrier 24 avec ses traducteurs par rapport aux singularités à contrôler telles que la bride 3 et la zone de raccord 5 dans cet exemple. Sur cette figure, on a symbolisé par un rectangle 33, le tableau de commande à partir duquel sont introduits et programmés les différents déplacements du bras 25 et de la structure 23 pour suivre au mieux le profil de la bride transversale et de la zone de raccord associé, et le fonctionnement et les réglages des traducteurs 21, 22 reliés par des liaisons 35 à ce tableau 33. D'autres commandes de l'installation sont également associées à ce tableau, comme on le verra plus tard.

De plus, du fait qu'une unique structure de support 23 en étrier 24 porte les deux traducteurs émetteur 21 et récepteur 22, l'installation de contrôle 20 a besoin d'immerger la zone à contrôler (bride et raccord) seulement au niveau de l'étrier 24 porteur des traducteurs pour favoriser la propagation des ondes ultrasonores.

Pour cela, comme le montrent les figures 3, 5 et 6, une boîte (ou bac) d'immersion 36 (en trait mixte sur la figure 3) est positionnée sur la bride concernée 3 du carter 1, en la chevauchant, de façon à immerger partiellement, par l'intermédiaire d'un liquide approprié L (eau) contenu dans celle-ci, la structure 23 en étrier 24 avec ses traducteurs. Cette boîte 36 est obtenue à partir d'une feuille ou tôle découpée et pliée de façon approprié et présente, dans la réalisation illustrée, une forme grossièrement parallélépipédique ouverte sur le dessus mais pourrait avoir une tout autre forme du moment que la structure 23 en étrier 24 est logée dans celle-ci, au niveau des traducteurs.

En particulier, la boîte 36 se compose de deux parties principales 37 et 38, l'une 37 située du côté intérieure à la paroi cylindrique 2 du carter 1, et l'autre 38 du côté extérieure. Ces deux parties 37, 38 sont assemblées dans le prolongement l'une de l'autre par un moyen de fermeture 40, de manière à s'emboîter autour de la bride 3 et de la zone de raccord 5 jusqu'à la paroi cylindrique 2. Pour permettre cela, la partie extérieure 38 est munie de découpes 41 ménagées dans le bord 42 de ses flancs latéraux concernés 43 et de forme complémentaire à la bride transversale 3, de sorte que celle-ci peut s'engager et s'ajuster dans les découpes.

Pour assurer l'étanchéité entre la boîte 36 et le carter 1 et éviter les fuites du liquide hors de celle-ci, des joints 44, par exemple en mousse, sont rapportés sur le bord 42 de la partie extérieure 38 et sur le bord 45 des flancs latéraux correspondant 46 de la partie intérieure 37 de la boîte 36. Ainsi, après avoir engagé la bride 3 dans les découpes 41 et réuni les parties de la boîte par le moyen de fermeture 40, du type à leviers 47 dans cet exemple, les joints 44 s'appliquent de part et d'autre de la paroi cylindrique 2 et assurent l'étanchéité recherchée.

Par ailleurs, la boîte d'immersion 36 repose également sur la face d'extrémité 3' de la bride transversale 3 par l'intermédiaire d'organes de roulement 48, tels que des galets ou roulettes, montés respectivement sur les flancs longitudinaux 43 de la partie extérieure 38. En outre, bien qu'ils ne soient pas représentés, des organes de roulement sont prévus sur la partie intérieure 37 de la boîte pour coopérer avec la face interne de la paroi cylindrique 2 du carter.

De par sa géométrie de révolution, le carter 1 de l'installation 20 représentée en regard de la figure 3, est monté mobile alors que la boîte d'immersion 36 est fixe, les galets 48 roulant sur la face 3' de la bride alors que le carter 1 tourne. Pour cela, ce dernier est placé sur un plateau tournant horizontal schématisé en 50 sur la figure 3 et reposant sur un support ou sol S, de sorte à avoir l'axe longitudinal de symétrie X vertical. La bride transversale 4 repose sur le plateau tournant 50, tandis que la bride transversale opposée 3 reçoit la boîte 36. Les joints d'étanchéité en mousse 44 n'endommagent pas le carter, de même que les galets en caoutchouc ou matière analogue qui maintiennent par ailleurs en place la boîte 36 sur l'extrémité à bride du carter 1 lorsque celui-ci tourne pour amener un nouveau secteur angulaire de la bride à examiner en regard des traducteurs.

Le contrôle en lui-même de la bride transversale et de la zone de raccord associée par la technique par ultrasons et immersion partielle pour y déceler les défauts préalablement énoncés, s'effectue de façon usuelle et ne sera pas davantage discuté ici. Seul le fonctionnement est décrit en regard des figures 3, 7 et 8.

Ainsi, après notamment la mise en place de la boîte 36 sur le carter 1, le remplissage en eau de celle-ci et le réglage de l'écartement des traducteurs par les organes 30, 31, la structure 23 est amenée dans la boîte par le bras robotisé 25 programmé à cet effet, pour que l'étrier 24 soit en regard de la bride 3 comme le montre la figure 3. Par une approche convenue du bras 25 selon un déplacement horizontal (radial par rapport à l'axe X du carter), les deux traducteurs 21, 22 passent respectivement de part et d'autre de la bride 3 immergée dans le liquide L, avec l'axe Y de ceux-ci perpendiculaire à la bride, laquelle s'engage progressivement, relativement, entre les traducteurs, dans l'espace interne 32 de l'étrier.

La bride 3, qui a un profil plat, est ainsi contrôlée et, lorsque l'étrier arrive au niveau de la zone de raccord 5, il pivote progressivement sous l'action du bras robotisé 25 articulé à la structure 23, pour suivre le profil rencontré, comme le montre la figure 7. L'espace 32 est tel qu'il permet l'engagement de la bride sans que celle-ci ne touche l'étrier. Et ce pivotement de l'étrier 24 se poursuit jusqu'au moment où les traducteurs 21 et 22 atteignent la paroi cylindrique 2, en ayant l'axe Y toujours perpendiculaire à la paroi rencontré pour un contrôle optimal, comme le montre la figure 8. La forme en U de l'étrier permet ainsi de suivre le profil de la bride 3 et la zone de raccord 5 jusqu'à la paroi 2, l'espace interne 32 de l'étrier servant à recevoir la bride et le raccord sans les toucher.

Après le contrôle de ce secteur angulaire de la bride pour y déceler d'éventuels défauts précités, la structure 23 en étrier 24 est retirée de la bride 3 par un déplacement inverse du bras 25 et, par l'intermédiaire du plateau tournant 50 relié par la liaison 51 au tableau de commande 33 et entraînant la rotation du carter 1, un secteur angulaire suivant de la bride 3 est amené dans la boîte d'immersion fixe pour analyse.

On réalise dans ce cas un contrôle pas à pas de la bride, mais on pourrait envisager un contrôle continu de la bride, sans interruption du plateau tournant.

Comme le montre très schématiquement la figure 9, on peut avantageusement contrôler de façon concomitante les deux brides transversales d'extrémité respectivement supérieure 3 et inférieure 4 du carter 1 en utilisant, pour cela, deux bras robotisés 25 et 25' tels que ceux 12, 15 de l'installation précédente 9. Cette dernière est utilisée avant ou après le contrôle des brides pour le contrôle de la paroi cylindrique 2 à partir des supports 11, 14 des traducteurs 10, 11. On monte les deux structures de support 23, 23' à étriers 24, 24' munis des traducteurs en bout des bras concernés, et chacune d'elles est logée dans la boîte d'immersion prévue sur chaque bride et non représentée sur cette figure. Bien évidemment, la bride inférieure ne repose pas sur le plateau tournant et le carter est entraîné en rotation différemment. Ainsi, à partir d'une même installation, en changeant simplement les structures de support des traducteurs en bout des bras robotisés, on contrôle parfaitement le profil complet du carter 1 et donc le matériau composite.

Les avantages de la solution à structure de support en étrier portant les deux traducteurs et la boîte d'immersion associée sont notamment : - de pouvoir approcher et accéder sans difficulté aux zones à brides et de raccord du carter par la forme en étrier, - d'assurer un couplage efficace et à moindre coût (simple boîte pliée et découpée), - d'utiliser l'un ou les deux bras robotisés de l'installation initiale pour contrôler successivement ou simultanément les brides, - d'éviter le contrôle en immersion totale du carter à brides, - de suivre aisément le profil des brides par la tolérance laissée par l'étrier, - de monter et démonter de manière simple et rapide la structure en étrier des bras et la boîte du carter sans endommager celui-ci et - de contrôler rapidement et sûrement les brides et zones de raccord et, donc, d'améliorer la qualité du contrôle ultrasonore.

## Revendications

1. Installation de contrôle par ultrasons en immersion d'une pièce tubulaire à paroi cylindrique (2) terminée par des brides transversales d'extrémité (3, 4), du type comportant des traducteurs émetteur (21) et récepteur (22) d'ultrasons commandables au contact d'un liquide de couplage, destinés à être disposés de façon alignée respectivement de part et d'autre de la bride à contrôler, et une structure (23) en étrier (24) en forme de U ou de C dont les branches opposées (26, 27) portent en bout respectivement le traducteur émetteur (21) et le traducteur récepteur (22) alignés l'un par rapport à l'autre, en ménageant entre eux un espace (32) pour le passage relatif de la bride à contrôler (3, 4), et dont la base (28) est montée articulée en bout d'un bras mobile de commande (25),
**caractérisée par le fait qu'**elle comprend une boîte d'immersion (36) dans laquelle est agencée la structure (23) en étrier (24) portant les traducteurs (21, 22) et qui contient le liquide pour le couplage des traducteurs entre eux, ladite boîte étant conformée pour être disposée sur la bride à contrôler (3, 4) et comportant deux parties (37, 38) aptes à s'engager et à chevaucher, avec étanchéité, la bride transversale et la paroi cylindrique attenante de la pièce tubulaire.

2. Installation selon la revendication 1, dont les traducteurs émetteur (21) et récepteur (22) sont montés de façon réglable par rapport aux branches opposées respectives (26, 27), pour régler l'écartement entre ceux-ci.

3. Installation selon la revendication 1 ou 2, dont la boîte d'immersion chevauche avec étanchéité la bride (3, 4) jusqu'à la paroi cylindrique (2) et est mobile par rapport à la pièce tubulaire (1) pour contrôler la périphérie complète de la bride.

4. Installation selon la revendication 1 ou 2, dont la boîte d'immersion (36) est fixe par rapport à la pièce tubulaire (1) qui est apte à être mise en rotation autour de son axe longitudinal de symétrie, ladite boîte d'immersion étant munie d'organes de roulement (48) destinés à coopérer avec la face transversale extérieure de la bride.

5. Installation selon l'une des revendications 1 à 4, dont les deux parties (37, 38) de la boîte d'immersion (36) sont assemblées entre elles par un moyen de fermeture (40), l'une (38) des parties présentant des découpes (41) pour l'engagement de la bride transversale et chevaucher, avec l'autre partie (37), ladite bride jusqu'à la paroi cylindrique de la pièce, des joints d'étanchéité (44) étant prévus entre les parties assemblées et la pièce.

6. Installation selon la revendication 4, dont un plateau tournant (50) assure la rotation de la pièce.

7. Installation selon l'une des revendications 1 à 6, dont deux structures (23, 23') en étrier (24, 24') à traducteurs émetteur (21, 21') et récepteur (22, 22') et bras commandables respectifs (25, 25') sont prévues pour permettre le contrôle simultané des deux brides transversales d'extrémité (3 et 4) de la pièce tubulaire (1), les deux structures étant agencées dans des boîtes d'immersion respectives (36, 36') contenant le liquide pour le couplage des traducteurs et conformées pour être disposées sur les brides transversales respectives.

## Patentansprüche

1. Ultraschallprüfanlage unter Eintauchen eines röhrenförmigen Teils mit zylindrischer Wand (2), die in Endquerflanschen (3, 4) des Typs endet, der Wandler-Sender (21) und Empfänger (22) für Ultraschall aufweist, die bei Berührung mit einer Kopplungsflüssigkeit steuerbar sind, die dazu bestimmt sind, jeweils zu beiden Seiten des zu steuernden Flanschs gefluchtet angeordnet zu werden, und eine Struktur (23) als Bügel (24) in U- oder C-Form, deren gegenüberliegenden Schenkel (26, 27) am Ende jeweils den Wandler-Sender (21) und den Wandler-Empfänger (22) tragen, die zueinander ausgerichtet sind, indem zwischen ihnen ein Raum (32) für das relative Durchgehen des zu steuernden Flanschs (3, 4) ausgespart ist, und deren Basis (28) gelenkig am Ende eines beweglichen Steuerarms (25) montiert ist,
**dadurch gekennzeichnet, dass** sie ein Eintauchgehäuse (36) aufweist, in dem die Struktur (23) als Bügel (24), die die Wandler (21, 22) trägt, eingerichtet ist und die die Flüssigkeit für das Koppeln der Wandler untereinander enthält, wobei das Gehäuse ausgebildet ist, um auf dem zu steuernden Flansch (3, 4) angeordnet zu sein und zwei Teile (37, 38) aufweist, die geeignet sind, um sich dicht in den Querflansch und die zylindrische Wand, die an das röhrenförmige Teil anschließt, einzufügen und darauf zu sitzen.

2. Anlage nach Anspruch 1, deren Wandler-Sender (21) und Empfänger (22) einstellbar in Bezug auf die jeweiligen gegenüberliegenden Schenkel (26, 27) montiert sind, um den Abstand zwischen diesen zu regeln.

3. Anlage nach Anspruch 1 oder 2, deren Eintauchgehäuse dicht auf dem Flansch (3, 4) bis zu der zylindrischen Wand (2) sitzt und in Bezug auf das röhrenförmige Teil (1) beweglich ist, um den vollständigen Umfang des Flanschs zu steuern.

4. Anlage nach Anspruch 1 oder 2, deren Eintauchgehäuse (36) in Bezug auf das röhrenförmige Teil (1) stationär ist, das um seine Längssymmetrieachse in Drehung versetzt werden kann, wobei das Eintauchgehäuse mit Rollelementen (48) versehen ist, die dazu bestimmt sind, mit der äußeren Querseite des Flanschs zusammenzuwirken.

5. Anlage nach einem der Ansprüche 1 bis 4, deren zwei Teile (37, 38) des Eintauchgehäuses (36) miteinander durch ein Verschlussmittel (40) zusammengebaut sind, wobei eines der Teile (38) Ausschnitte (41) für das Einfügen des Querflanschs aufweist und um mit dem anderen Teil (37) auf dem Flansch bis zu der zylindrischen Wand des Teils zu sitzen, wobei Dichtungen (44) zwischen den zusammengefügten Teilen und dem Teil vorgesehen sind.

6. Anlage nach Anspruch 4, deren Drehplatte (50) die Drehung des Teils sicherstellt.

7. Anlage nach einem der Ansprüche 1 bis 6, deren zwei Strukturen (23, 23') als Bügel (24, 24') mit Wandler-Sender (21, 21') und Empfänger (22, 22') und jeweilige steuerbare Arme (25, 25') vorgesehen sind, um die gleichzeitige Steuerung der zwei Endquerflansche (3 und 4) des röhrenförmigen Teils (1) zu erlauben, wobei die zwei Strukturen in jeweiligen Eintauchgehäusen (36, 36'), die die Flüssigkeit für das Koppeln der Wandler enthalten und ausgebildet sind, um auf den jeweiligen Querflanschen angeordnet zu sein, eingerichtet sind.

## Claims

1. An installation for the ultrasonic immersion testing of a tubular part having a cylindrical wall (2) terminated by transverse end flanges (3, 4), of the type comprising controllable transducers in contact with a coupling liquid for emitting (21) and for receiving (22) ultrasounds and which are designed to be arranged such that they are aligned respectively on either side of the flange to be tested, and a structure (23) in the form of a U shaped or C shaped stirrup (24), wherein the opposing branches (26, 27) bear, at their ends, respectively the emitter transducer (21) and the receiver transducer (22) aligned with respect to each other, creating between them a space (32) through which the flange to be tested (3, 4) can pass, and wherein the base (28) is mounted in an articulated manner at the end of a moveable control arm (25),
**characterized in that** it comprises an immersion container (36) inside which is arranged the stirrup (24) shaped structure (23) bearing the transducers (21, 22) and which contains a liquid for coupling the transducers to one another, wherein said container is shaped to be arranged over the flange to be tested (3, 4) and comprises two portions (37, 38) adapted to engage and straddle, with sealing, the transverse flange and the adjoining cylindrical wall of the tubular part.

2. The installation as claimed in claim 1, wherein the emitter (21) and receiver (22) transducers are mounted such that they can be adjusted with respect to the respective opposing branches (26, 27) in order to adjust the separation between these.

3. The installation as claimed in claim 1 or 2, wherein the immersion container straddles the flange (3, 4) with sealing as far as the cylindrical wall (2) and can be moved relative to the tubular part (1) in order to test the entire periphery of the flange.

4. The installation as claimed in claim 1 or 2, wherein the immersion container (36) is immobile with respect to the tubular part (1) which can be rotated about its longitudinal axis of symmetry, said immersion container having rolling members (48) designed to engage with the transverse outer face of the flange.

5. The installation as claimed in one of claims 1 to 4, wherein the two portions (37, 38) of the immersion container (36) are joined together using a closing means (40), one (38) of the portions having cutouts (41 ) for engaging the transverse flange and for straddling, with the other portion (37), said flange as far as the cylindrical wall of the part, seals (44) being provided between the joined together portions and the part.

6. The installation as claimed in claim 4, wherein a rotating plate (50) rotates the part.

7. The installation as claimed in one of claims 1 to 6, wherein two structures (23, 23') in the form of stirrups (24, 24') having emitter transducers (21, 21') and receiver transducers (22, 22') and respective controllable arms (25, 25') are provided so as to be able to test, simultaneously, the two transverse end flanges (3 and 4) of the tubular part (1), the two structures being arranged in the respective immersion containers (36, 36') containing the liquid for the coupling of the transducers and shaped to be disposed on the respective transverse flanges.
